# FASCICULE DE BREVET EUROPEEN

(11) **EP 1 457 024 B1**
(45) Date de publication et mention de la délivrance du brevet: **09.08.2006**
(21) Numéro de dépôt: 02803848.7
(22) Date de dépôt: 28.11.2002
(51) Int. Cl.: H04L 29/06, H04N 5/00, H04N 7/173

(54) **PROCEDE ET SYSTEM POUR ACCEDER AUX COURRIERS ELECTRONIQUES VIDEO ET MULTIMEDIA**
VERFAHREN UND SYSTEM ZUM ZUGREIFEN AUF VIDEO-EMAIL UND MULTIMEDIA
METHOD AND SYSTEM FOR ACCESSING VIDEO ELECTRONIC MAIL AND MULTIMEDIA

(30) Priorité: 28.11.2001 FR 0115388
(43) Date de publication de la demande: 15.09.2004
(73) Titulaire: Medialive, 75116 Paris (FR)
(72) Inventeur: LECOMTE, Daniel, F-75116 Paris (FR)
(74) Mandataire: Breese, Pierre
(86) Numéro de dépôt international: PCT/FR2002/004096
(87) Numéro de publication internationale: WO 2003/047202

(56) Documents cités:
- WO-A-00/11871
- US-A- 5 790 174

## Description

La présente invention concerne l'accès à tout courrier électronique multimédia ou vidéo, tout programme ou toute séquence multimédia ou vidéo, par des utilisateurs autorisés et propose un procédé pour envoyer le courrier électronique vidéo ou les programmes et/ou séquences multimédias interactifs à des écrans de visualisation comme des téléviseurs, l'envoi étant géré et contrôlé par un téléphone simple ligne ou multiligne, un téléphone mobile ou un téléphone cellulaire, ce téléphone n'étant pas capable d'afficher la moindre donnée vidéo ou multimédia.

La demande en services multimédias interactifs est de plus en plus croissante. Les systèmes de distribution d'informations multimédias basés sur les réseaux de communication, par exemple les systèmes de vidéo à la demande sont en pleine expansion et sont caractérisés par leur complexité. Toutefois, dans beaucoup de cas, ces systèmes de distribution sont très coûteux à implémenter chez l'utilisateur, manquent de sécurité, de flexibilité à l'utilisation et d'adaptabilité aux différents clients et à leurs besoins.

L'art antérieur connaît déjà, par la demande de brevet PCT WO 00/11871, un système et un procédé permettant à l'utilisateur de commander et de télécharger des fichiers médias choisis à partir de sites distribués de fournisseurs de contenus à travers un réseau de télécommunication. Le système comprend une pluralité de sites d'utilisateurs, chacun comportant un sous-système de réception et d'affichage ou de lecture localisé dans une enceinte ayant une interface utilisateur simple, une pluralité de sites fournisseurs de contenu, et un serveur de transaction. Le sous-système de réception et d'affichage ou de lecture permet à l'utilisateur de se connecter au serveur de transaction à travers un réseau de télécommunication pour accéder à la liste des fichiers médias disponibles. L'utilisateur est alors capable de choisir les fichiers désirés et, à travers le récepteur/afficheur et le réseau de communication, de demander au serveur de transaction de télécharger les fichiers sélectionnés. La demande de fichier, l'encryptage du fichier et les instructions de transfert sont transmis à partir du serveur de transaction vers le site fournisseur de contenu où sont stockés les fichiers demandés. Les fichiers encodés sont cryptés de manière dynamique par le site fournisseur de contenu et téléchargés de façon sécurisée vers le lecteur/récepteur demandant. Le lecteur/récepteur automatise et gère le décryptage et le décodage des fichiers téléchargés et l'affichage ou la lecture de ces fichiers à travers un téléviseur domestique conventionnel et/ou un système audio. Cet art antérieur oblige l'utilisateur à être localisé uniquement à une adresse fixe ; de plus, les utilisateurs ne peuvent pas recevoir les données multimédias à l'extérieur de leur domicile. Selon la présente invention, l'utilisateur peut recevoir des contenus vidéo et multimédias indépendamment de l'endroit où il se trouve dans le monde.

L'art antérieur connaît également, par la demande de brevet américain US 5,790,174, un réseau téléphonique commuté (RTC) public fournissant des signaux vidéos à partir d'un fournisseur d'information vidéo vers un ou plusieurs abonnés d'une pluralité d'abonnés. Un abonné utilise soit un téléphone standard à travers le RTC ou bien un dispositif de contrôle dédié à travers un réseau ISDN (Integrated Services Digital Network) ou RNIS (Réseau Numérique à Intégration de Services) par paquets pour commander le programme vidéo. La demande est transmise vers un fournisseur de contenu vidéo désigné et une liaison numérique de transmission est établie entre le fournisseur d'informations vidéos et le poste central servant l'abonné. La connectivité entre le poste central et l'abonné est assurée par une ligne ADSL (Asymmetrical Digital Subscriber Line) à travers des unités d'interfaçage en boucle locale. Les unités d'interface effectuent un multiplexage fréquentiel entre l'information vidéo numérique et de l'information vocale pour l'abonné et supportent la transmission du canal inverse de contrôle de l'abonné vers le poste central pour transmettre dans le réseau par paquets ISDN en direction du fournisseur d'information vidéo. Les interfaces permettent aussi une signalisation en bande de base et de l'audio entre le poste central et l'abonné pour une connectivité téléphonique conventionnelle.

La présente invention améliore l'art antérieur, d'après lequel l'appareil téléphonique est utilisé uniquement pour établir une liaison avec le serveur, pour identifier l'utilisateur et pour que ledit utilisateur commande des données multimédias. Dans la présente invention, le téléphone est utilisé non seulement pour se connecter au serveur, mais aussi pour être connecté par le serveur ou par un dispositif-boîtier d'interfaçage avec l'équipement d'affichage pour recevoir, échanger et transférer des informations avec le serveur et, participe au transfert et à l'échange de données multimédias. De plus le téléphone, que ce soit un téléphone fixe ou un téléphone cellulaire est indépendant du domicile de l'utilisateur et de l'utilisateur lui-même, ainsi que le dispositif d'affichage de type téléviseur par exemple est indépendant de l'utilisateur et de son domicile.

L'art antérieur connaît également, par la demande de brevet américain US 5,712,906, un réseau RTC public pour fournir des informations à partir d'un serveur d'informations multimédias vers au moins un abonné d'une pluralité d'abonnés, comprenant un poste central pour la réception des signaux d'information multimédia à partir d'un serveur d'information multimédia et commandés par l'abonné. Le poste central comprend un système de passerelle pour envoyer les données de routage en réponse à la commande de l'abonné et un commutateur pour router les signaux multimédias du serveur vers l'abonné en fonction des données de routage. Une interface présente dans le poste central transmet et reçoit les signaux de service audio téléphoniques, les signaux de contrôle de l'abonné et des signaux d'informations numériques multimédias dans le premier, second et troisième canal de signal. Chaque local d'abonné comporte une interface pour transmettre et recevoir les signaux de service audio téléphoniques, les signaux de contrôle de l'abonné et des signaux d'informations multimédias numériques dans les trois canaux de signaux. Une pluralité de boucles locales d'abonnés interconnecte chaque interface d'abonné avec l'interface du poste central. L'information multimédia est collectée à partir de fournisseurs d'information et est stockée dans des serveurs médias qui fournissent des bibliothèques de sessions de contrôles et de données. Les modules logiciels dans les serveurs médias et les terminaux résidents permettent l'établissement d'une session interactive multimédia, l'échange de bases de données et la préparation conjointe de présentations multimédias.

La présente invention améliore l'art antérieur d'après lequel l'utilisateur peut être localisé uniquement à une adresse fixe et ne peut recevoir les données multimédias ailleurs que son domicile. Selon la présente réalisation, l'utilisateur peut recevoir des données multimédia indépendamment de l'endroit où il se trouve. Dans l'art intérieur, la communication de demande est effectuée uniquement dans le sens unilatéral client - serveur, le transfert d'informations vidéo dans le sens unilatéral serveur - client. Dans la présente invention, la communication est bilatérale, par exemple le serveur peut décider d'envoyer de l'information à un utilisateur ou à un ensemble d'utilisateurs sans que ces derniers n'en aient faits la demande. Le serveur peut également décider de transférer les informations multimédias à un autre serveur en fonction de la localisation du client et du type de dispositif d'affichage présent sur les lieux et prévenir l'utilisateur de la disponibilité des informations.

L'art antérieur connaît également, par la demande de brevet américain US 5,802,283, un réseau RTC public pour fournir des informations à partir d'un serveur d'information multimédia vers un abonné quelconque d'une pluralité d'abonnés, comprenant un poste central pour la réception des signaux d'information multimédia à partir d'un serveur d'information multimédia et commandés par l'abonné. Ce brevet fait partie de la famille du brevet cité précédemment (US 5,712,906). Il se distingue du brevet US 5,802,283 par son dispositif qui a la caractéristique de pouvoir transférer et rediriger des informations multimédias entre deux utilisateurs, par exemple dans le cadre d'une vidéo conférence, les utilisateurs ne pouvant recevoir les informations qu'à leur domicile.

La présente invention propose un système et un dispositif souple et personnalisable répondant à la mobilité des utilisateurs. Un autre avantage de la présente invention est que le serveur prend la décision de rediriger les données en fonction de la localisation du client itinérant à la demande de ce dernier ou sans sa demande. Le serveur peut également décider de diffuser à un ensemble d'utilisateurs des informations multimédias. A la différence de l'art antérieur, selon lequel deux utilisateurs peuvent s'échanger des informations médias en établissant une connexion directe, dans la présente invention deux utilisateurs peuvent s'échanger des données multimédias sans établir de connexion directe entre eux, mais en redirigeant de l'information multimédia, par exemple sur le dispositif d'affichage de type télévision au domicile d'un premier utilisateur, à partir du téléphone fixe du domicile d'un second utilisateur. La présente invention est décrite par des exemples de réalisation.

Le principal problème à résoudre par la présente invention est de fournir un accès à différentes données vidéo ou multimédia avec un téléphone simple, ce téléphone ne présentant pas de capacité et de possibilité multimédia.

Avec les solutions actuelles, il est possible de recevoir un message ou un courrier électronique multimédia sur son téléphone portable, uniquement si celui-ci est capable d'afficher des informations de type multimédia et/ou vidéo. Dans le cas contraire, c'est-à-dire si le téléphone cellulaire n'a aucune possibilité d'affichage d'information vidéo ou multimédia, la consultation-visualisation de ce type de messages n'est pas possible.

Selon la présente invention, il est possible de recevoir avec n'importe quel téléphone mobile ou cellulaire, un message ou un courrier électronique comportant des données multimédias ou de type vidéo, même si ce téléphone n'a aucune capacité d'affichage d'images fixes ou animées, le but étant alors de visualiser ces images sur un écran comme par exemple un poste de télévision.

Une autre possibilité de l'invention est de pouvoir demander à partir d'un simple poste de téléphone classique, simple ligne ou multiligne, analogique ou numérique, la lecture, la visualisation et l'affichage d'un message multimédia que l'on a reçu sur son téléphone cellulaire, sans qu'il soit nécessaire de connecter ce dernier au réseau cellulaire.

Selon la présente invention, l'objectif précité est atteint par la fourniture d'un agencement d'interfaçage vidéo pour relier au moins un dispositif d'affichage, par exemple un dispositif de type écran de télévision, à au moins une source vidéo et multimédia, caractérisé en ce qu'il est composé d'un module comprenant principalement, d'une part, une unité de traitement numérique adaptée pour traiter, en particulier décoder et désembrouiller tout type de flux vidéo selon un programme de décodage et désembrouillage pré-chargé, de manière à l'afficher en temps réel ou en différé, de le stocker, de l'enregistrer et/ou de l'envoyer sur un réseau de télécommunication et, d'autre part, au moins une interface d'écran, au moins une interface de stockage ou d'enregistrement, une interface de connexion à un réseau local ou étendu, une interface utilisateur de communication et de contrôle, lesdites interfaces étant liées à et pilotées par ladite unité de traitement et de préférence montées dans ou sur ledit module.

L'invention concerne, dans son acception la plus générale, un procédé pour l'accès au courrier électronique vidéo et/ou aux programmes et/ou aux séquences vidéo reçus par et/ou stockés dans des serveurs multimédia adaptés (5) grâce à un réseau de télécommunication étendu (3) par des utilisateurs autorisés pourvus d'agencements, dans un système de distribution pour accéder au courrier électronique vidéo et multimédia à partir d'un simple téléphone à ligne unique ou un téléphone mobile ou cellulaire vocal pour affichage dans des conditions données sur des écrans de télévision, comprenant les étapes consistant à :
- utiliser un téléphone (2, 10), pour accéder au serveur multimédia concerné (5) par le réseau étendu de télécommunication (3) ;
- vérifier l'identité et l'autorisation de l'utilisateur au serveur concerné (5) ;
- commander le transfert d'un ou de plusieurs courrier(s) électronique(s) vidéo ou multimédia(s) donné(s) ou programme(s) ou séquence(s) vidéo ou multimédia(s) à un agencement d'interfaçage vidéo identifié (8) également relié audit réseau de télécommunication étendu (3) pour un affichage immédiat ou pour au moins un stockage partiel et/ou un affichage différé ;
- afficher, transférer, enregistrer ou traiter d'une autre manière le/les courrier(s) électronique(s) vidéo ou le/les programme(s) et/ou la/les séquence(s) transféré(s) sur instructions de l'utilisateur,
   caractérisé en ce qu'il comprend
- une étape de préchargement d'un protocole de transfert adapté et/ou un logiciel de décodage ou de désembrouillage à partir dudit serveur (5) vers ledit agencement d'interfaçage vidéo (8) et une étape de vérification de l'identité de l'utilisateur et de ses droits en fonction de possibles restrictions d'utilisation avant l'exécution de ladite étape d'affichage, de transfert ou de traitement des courriers électroniques.

De préférence, le procédé comporte en outre une étape consistant à :
- afficher, transférer, enregistrer ou traiter d'une autre manière le(s)courrier(s) électronique(s) vidéo ou le(s) programme(s) ou la(les) séquence(s) transféré(s) sur décision du serveur et après que ledit serveur ait vérifié l'identité et les droits de l'utilisateur en fonction de possibles restrictions d'utilisation ;

Avantageusement, le procédé comporte en outre une étape consistant à :
- afficher, transférer, enregistrer ou traiter d'une autre manière le(s) courrier(s) électronique(s) vidéo ou le(s) programme(s) ou la (les) séquence(s) transféré(s) sur appel après décision dudit agencement d'interfaçage vidéo (8) vers l'utilisateur et/ou le serveur, et en fonction des instructions de l'utilisateur et autorisation du serveur, après vérification de l'identité de l'utilisateur et de ses droits en fonction de possibles restrictions d'utilisation.

Selon une variante, le procédé comprend l'utilisation d'un téléphone fixe ou d'un téléphone cellulaire logiquement lié au domicile de l'utilisateur pour afficher le contenu multimédia à un dispositif d'affichage au domicile de l'utilisateur.

Selon une autre variante, le procédé comprend l'utilisation d'un téléphone fixe ou d'un téléphone cellulaire logiquement lié au domicile de l'utilisateur pour afficher le contenu multimédia à un dispositif d'affichage à un endroit prédéterminé différent du domicile de l'utilisateur.

Selon un mode de mise en oeuvre particulier, le procédé comprend l'utilisation d'un téléphone fixe non lié logiquement au domicile de l'utilisateur ou d'un téléphone cellulaire n'appartenant pas à l'utilisateur pour afficher le contenu multimédia à un dispositif d'affichage au domicile de l'utilisateur.

Selon un autre mode de mise en oeuvre particulier, le procédé comprend l'utilisation d'un téléphone fixe n'appartenant pas au domicile de l'utilisateur ou d'un téléphone cellulaire n'appartenant pas à l'utilisateur pour afficher le contenu multimédia à un dispositif d'affichage à un endroit prédéterminé différent du domicile de l'utilisateur.

De préférence, les serveurs peuvent décider l'envoi, le transfert, la diffusion ou la distribution d'un contenu multimédia vers un ensemble d'utilisateurs.

Avantageusement, les dispositifs d'interfaçage (8) peuvent décider l'envoi, le transfert, la diffusion ou la distribution d'un contenu multimédia vers un ensemble d'utilisateurs.

Selon une variante, les liaisons entre les serveurs (5), les dispositifs d'interfaçage (8) et les utilisateurs sont bilatéraux et l'échange de données multimédias se fait dans les deux sens.

Selon une autre variante, le procédé assure une interactivité multimédia entre les utilisateurs sans que lesdits utilisateurs aient une connexion directe entre eux.

Avantageusement, un ensemble d'utilisateurs peut décider l'envoi, le transfert, la diffusion ou la distribution d'un contenu média à partir d'un serveur après que ledit serveur a vérifié l'identité et les droits des utilisateurs en fonction de possibles restrictions d'utilisation.

Selon un mode de mise en oeuvre particulier, le serveur multimédia (5) décide que le module (8) stocke le courrier électronique vidéo ou le contenu multimédia sur le disque dur ou tout dispositif de stockage du module (8).

Selon un mode de mise en oeuvre particulier, le module (8) lui-même décide de stocker le courrier électronique vidéo ou le contenu multimédia sur son disque dur ou son dispositif de stockage.

L'invention concerne également un système de distribution pour accéder au courrier électronique vidéo et multimédia à partir d'un simple téléphone à ligne unique ou un téléphone mobile ou cellulaire vocal pour affichage dans des conditions données sur des écrans de télévision pour la mise en oeuvre du procédé décrit précédemment, caractérisé en ce qu'il comprend essentiellement, d'une part, un ou plusieurs serveurs multimédia (5), recevant et stockant au moins le courrier électronique vidéo, des programmes et des séquences vidéo et reliés chacun au réseau de télécommunication étendu (3) et d'autre part, une pluralité d'agencements d'interfaçage vidéo (8), reliés également au réseau de télécommunication étendu (3) et installés aux domiciles des utilisateurs ou dans des lieux prédéterminés différents des domiciles des utilisateurs, chaque agencement d'interfaçage vidéo (8) étant associé à au moins un dispositif d'affichage de type écran de télévision (7) et un téléphone cellulaire (2) ou un simple téléphone à ligne unique (10), ledit téléphone et ledit dispositif d'affichage étant indépendants du domicile de l'utilisateur et de l'utilisateur lui-même, et ledit téléphone comportant des moyens pour se connecter au serveur, des moyens pour être connecté par le serveur ou par l'agencement d'interfaçage vidéo au dispositif d'affichage pour recevoir, échanger et transférer des informations avec le serveur et des moyens pour participer au transfert et à l'échange de données multimédias, le serveur comportant des moyens pour le préchargement d'un protocole de transfert adapté et/ou un logiciel de décodage ou de désembrouillage à partir dudit serveur (5) vers ledit agencement d'interfaçage vidéo (8) et des moyens de vérification de l'identité de l'utilisateur et de ses droits en fonction de possibles restrictions d'utilisation avant l'exécution de ladite étape d'affichage, de transfert ou de traitement des courriers électroniques.

De préférence, le système analyse et transforme le contenu des données multimédias en fonction des caractéristiques du dispositif d'affichage.

Avantageusement, le système analyse et transforme le contenu des données multimédia en fonction du débit du réseau de télécommunication.

Selon une variante, le système analyse et transforme le contenu et le débit des données multimédias en fonction du prix que l'utilisateur est prêt à payer, l'utilisateur ayant la possibilité de négocier différents paramètres du transfert comme le débit, le taux d'erreur et la vitesse de transfert.

Selon une autre variante, le système permet de relier et de faire cohabiter différentes technologies dotées ou non de capacités multimédias.

Selon un mode de réalisation particulier, l'interface d'écran comprend une connexion d'interface d'écran standard par câble et/ou une interface d'écran sans-fil.

Selon un autre mode de réalisation, l'interface de connexion au réseau est reliée à un réseau de télécommunication étendu, directement ou par un réseau local servant de réseau d'accès et est constitué d'une interface de ligne d'abonné numérique, telle qu'un modem, une interface satellite ou câblée, d'une interface de ligne de fibre optique ou d'une interface hertzienne pour la communication radio.

Selon un mode de réalisation particulier, le module, comprenant de préférence toutes lesdites interfaces, constitue un dispositif indépendant monté dans une enceinte de protection appropriée.

Avantageusement, le module, et de préférence toutes les interfaces, sont montés à l'intérieur d'un téléviseur, sur la carte de commande électronique de ladite télévision ou au moins partiellement sur une carte séparée.

La présente invention concerne également un système de distribution pour transférer des programmes vidéo et des séquences multimédias sur un réseau de télécommunication étendu vers des utilisateurs autorisés ou des systèmes d'abonnés pour affichage, dans des conditions données, sur des écrans adaptés, caractérisé en ce qu'il est essentiellement composé, d'une part, d'un ou de plusieurs serveurs multimédias, recevant et stockant au moins des programmes et des séquences vidéo et reliés chacun directement ou par un portail ou un serveur de portail et/ou un réseau d'accès à un réseau de télécommunication étendu et, d'autre part, une pluralité d'agencements d'interfaçage vidéo ci-dessus, reliés également à un réseau étendu et installé aux domiciles des utilisateurs ou dans des lieux prédéterminés, chaque agencement d'interfaçage vidéo étant associé à au moins un dispositif d'affichage de type écran de télévision.

La présente invention concerne également un système de distribution pour transférer des programmes vidéo et des séquences multimédias sur un réseau de télécommunication étendu vers des utilisateurs autorisés ou des systèmes d'abonnés pour affichage, dans des conditions données, sur des écrans adaptés, caractérisé en ce qu'il est également composé d'une pluralité d'agencements d'interfaçage vidéo intégrant un dispositif d'affichage comme un récepteur de type assistant personnel relié à un réseau de télécommunication filaire ou sans fil, avec écran intégré.

Le serveur de portail peut stocker une partie ou la totalité du contenu multimédia de manière à être en mesure de l'envoyer à n'importe quel module sans avoir à le demander au serveur multimédia. Le serveur de portail peut prendre la décision de diffuser à un utilisateur ou à un ensemble d'utilisateurs des données multimédias personnalisées ou un même message audiovisuel avec ou sans demande de la part des utilisateurs. Le serveur peut également décider de rediriger des informations vers un ou d'autres serveurs de médias en fonction de la localisation itinérante d'un utilisateur ou d'un ensemble d'utilisateurs.

Dans un exemple de réalisation, le serveur envoie des données multimédias vers un serveur de type LAN (Local Area Network, réseau local), comme par exemple un réseau d'entreprise ou un réseau domestique, à partir duquel les clients peuvent consulter les données multimédias ou les rediriger vers d'autres utilisateurs.

Le module peut également stocker tout ou partie du contenu multimédia sur son disque dur ou tout autre dispositif de stockage comme de la mémoire flash par exemple, de manière à ce qu'il n'ait pas à interrompre le flux de données entrant lorsque l'utilisateur veut faire une pause ou à demander à nouveau un contenu antérieur en faisant un retour arrière. Le serveur de portail peut décider si le module doit stocker le contenu multimédia sur le disque dur ou le dispositif de stockage du module d'interface 8.

Le module 8 lui-même peut décider de stocker le contenu multimédia sur son disque dur ou sur son dispositif de stockage.

La présente invention sera mieux comprise grâce à la description suivante présentant la base physique de la présente invention et en référence au dessin en annexe représentant un mode de réalisation préféré de cette dernière en tant qu'exemple non limitatif de réalisation.

Sur le dessin en annexe :
- la figure 1 est un schéma de principe d'un système de distribution selon la présente invention ;
- la figure 2 représente un exemple de réalisation préféré du système selon la présente invention.

L'agencement d'interfaçage vidéo 8 est adapté pour relier au moins un dispositif d'affichage, par exemple un dispositif de type écran de télévision 1, à au moins une interface de réseau de télécommunication 6. Selon la présente invention, cet agencement est composé d'un module 8 comprenant principalement, d'une part, une unité de traitement adaptée pour traiter, en particulier décoder et désembrouiller tout type flux vidéo selon un programme logiciel de décodage et désembrouillage pré-chargé, de manière à l'afficher, en temps réel ou différé, de le stocker, de l'enregistrer et/ou de l'envoyer sur un réseau de télécommunication et, d'autre part, au moins une interface d'écran 7 et une interface de connexion à un réseau local ou étendu 6.

Le disque dur ou le dispositif de stockage du module 1 peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du serveur de portail.

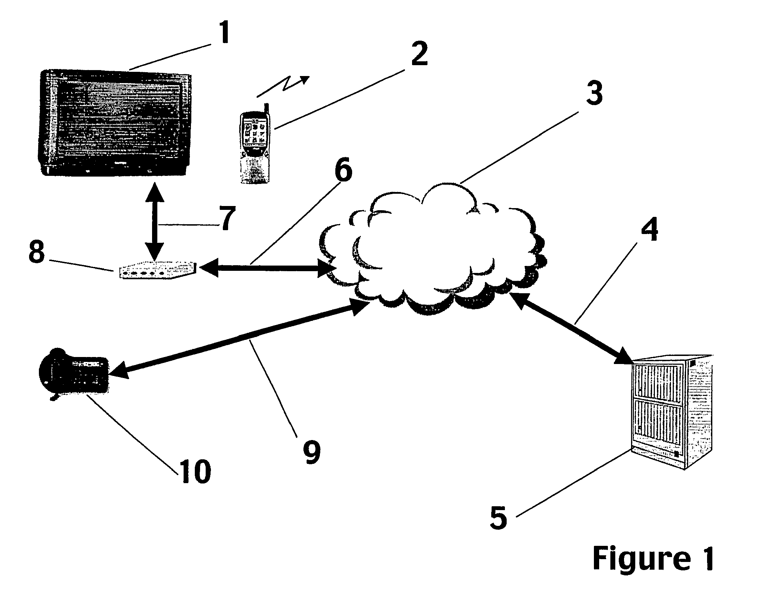

Comme le montre la figure 1, l'interface de connexion au réseau 6 est reliée à un réseau de télécommunication étendu 3, directement ou par un réseau local servant de réseau d'accès et est constitué par exemple d'une interface de ligne d'abonné numérique (DSL), telle qu'un modem, un modem satellite, un modem câblé, d'une interface de ligne à fibre optique ou d'une interface radio ou infrarouge pour la communication sans-fil.

Le module 8 est également capable d'afficher, en surimpression sur l'image/les images décodée(s), des informations graphiques pour guider l'utilisateur. Il est également capable de prendre la décision d'appeler le module 10 ou le module 2 ou le serveur 4 afin de consulter, télécharger, rediriger, stocker et diffuser des informations, par exemple des messages, que ce soit des messages d'entreprise ou personnels pour chaque client ou pour un ensemble de clients.

L'enceinte de protection ou le téléviseur peut également intégrer en plus des interfaces (les structures et les protocoles de transmission de celles-ci étant connues de l'homme de l'art), une partie de l'équipement périphérique reliée à ces interfaces, de type assistant personnel, PDA (Personal Digital Assistant)ou tout autre récepteur capable de recevoir des ondes radio, de manière à réceptionner les données et les afficher directement sur son écran intégré ou indirectement sur l'écran d'un téléviseur.

La présente invention concerne également le dispositif physique utilisé par le consommateur pour accéder aux données. Ce dispositif physique est situé au domicile de l'utilisateur ou dans un lieu déterminé. Il fournit un ensemble de fonctionnalités qui gèrent l'information appropriée à présenter selon la sélection de l'audience et gère la connexion et la communication avec le serveur distant, lui-même capable d'envoyer des ondes radio vers tout autre récepteur, par exemple de type PDA ou assistant personnel.

La présente invention concerne également un système de distribution pour transférer des programmes vidéo et des séquences multimédia codés sur un réseau étendu 3 vers des utilisateurs autorisés ou des systèmes d'abonnés pour affichage dans des conditions données sur des écrans adaptés 1, caractérisé en ce qu'il est essentiellement composé, d'une part, d'un ou de plusieurs serveurs multimédia 5, recevant et stockant au moins des programmes et des séquences vidéo et multimédias et relié chacun directement ou par un portail ou un serveur de portail et/ou un réseau d'accès à un réseau de télécommunication étendu 3 et, d'autre part, une pluralité d'agencements d'interfaçage vidéo 8, décrits antérieurement, reliés également à un réseau étendu 3 et installés aux domiciles des utilisateurs ou dans des lieux prédéterminés accessibles aux utilisateurs, chaque agencement d'interfaçage vidéo 8 étant associé à au moins un dispositif d'affichage de type écran de télévision 1.

Selon la présente invention, les serveurs multimédia 5 comprennent des moyens de codage, de transcodage et de brouillage de données vidéo, en particulier des moyens d'ajouter des informations cryptographiques et de sécurité au début et tout au long des séquences.

Bien que la présente invention soit plus particulièrement axée sur les données vidéo telles que le courrier électronique vidéo, il est entendu que toute information multimédia interactive et toutes données interactives peuvent être traitées par le présent agencement et le présent système, les données vidéo étant les plus élaborées.

Le serveur 5 offre des capacités standard de téléphone, de web et d'Internet pour donner l'accès à n'importe quelle sorte d'information multimédia. Il vérifie également, gère et réalise l'abonnement de tout utilisateur qui souhaite être connecté à n'importe quel serveur multimédia qu'il fasse partie du système ou non, afin de pouvoir rediriger des informations multimédias à l'endroit où se trouve momentanément l'utilisateur.

Pour consulter son courrier électronique ou son message multimédia à partir de son simple téléphone cellulaire, l'usager appelle son système de messagerie de façon classique, puis, au moment de visualiser son message, il indique à son système de messagerie qu'il souhaite consulter la partie vidéo et multimédia sur son poste de télévision. Le lieu de situation du poste de télévision en question aura pu être indiqué auparavant au système de messagerie, le lieu et donc l'adresse du poste de télévision étant associé au numéro de téléphone cellulaire, ou à plusieurs numéros de téléphones cellulaires et/ou à leurs boîtes vocales et multimédias.

Une autre possibilité de l'invention permet de commander la consultation de son message multimédia, à partir de son téléphone cellulaire, mais en indiquant au système de messagerie, une adresse temporaire pour désigner le téléviseur sur lequel l'usager veut regarder son message à cet instant précis.

Une autre réalisation possible de l'invention permet de commander la consultation de son message multimédia, à partir d'un téléphone cellulaire ou téléphone fixe quelconque, à l'extérieur du domicile de l'utilisateur en indiquant au système de messagerie, une adresse temporaire pour désigner le téléviseur sur lequel l'usager veut regarder son message à cet instant précis. Une autre possibilité de l'invention permet de commander la visualisation sur un poste de télévision, en consultant sa boîte vocale multimédia, à partir d'un simple poste téléphonique. Cette possibilité présente l'avantage de permettre la consultation du message même en l'absence de réseau cellulaire ou bien en l'absence de téléphone cellulaire, soit parce que le réseau cellulaire est saturé, soit parce que les conditions de réception-émission cellulaire ne sont pas de bonne qualité. Dans ce cas, à partir d'un simple poste de téléphone, l'usager compose le numéro de consultation de sa boîte vocale, s'identifie en composant son numéro de boîte vocale, puis indique grâce à son clavier téléphonique, s'il veut consulter le message multimédia sur le téléviseur associé à sa boîte vocale ou s'il désire visualiser le message sur un autre téléviseur dont il indiquera l'adresse logique via le clavier téléphonique du poste de téléphone classique avec lequel il vient d'établir cette liaison téléphonique avec le système de messagerie vocale.

Une autre réalisation possible de l'invention permet de commander la consultation de son message multimédia, à partir d'un téléphone cellulaire ou fixe quelconque, à l'extérieur du domicile de l'utilisateur en indiquant au système de messagerie, une adresse temporaire pour désigner le téléviseur sur lequel l'usager veut que le serveur envoie les données multimédias, le téléviseur étant au domicile d'un deuxième usager, et après vérification des droits des deux usagers par le serveur, d'afficher sur l'écran de télévision du second usager les données multimédias.

L'utilisateur doit appeler son serveur de messagerie pour réaliser l'accès au serveur vidéo et multimédia 5. Pour le faire, l'utilisateur prend un poste téléphonique 2, 10, et, après avoir décroché, compose sur son téléphone le numéro d'accès à son système de messagerie qui se trouve dans le réseau de télécommunication étendu 3, ce téléphone étant à simple ligne ou à lignes multiples 10 ou un téléphone mobile ou cellulaire 2, ne présentant aucune possibilité d'affichage multimédia.

Le système de messagerie 5 identifie automatiquement le numéro de l'appelant si celui-ci est disponible à travers le réseau de télécommunication 3, dans le cas contraire, le système de messagerie 5 demande à l'utilisateur de s'identifier en composant son numéro de messagerie sur son clavier téléphonique 10 ou 2.

L'identification peut se faire soit en composant son propre numéro de téléphone, la correspondance entre le numéro de la boîte vocale et multimédia et le numéro de téléphone étant alors faite automatiquement par le système de messagerie 5, soit par identité directe entre le numéro composé sur le clavier 10 ou 2 par l'utilisateur et le numéro de la boîte de messagerie vidéo et multimédia 5 se trouvant dans le réseau de télécommunication 3.

L'abonné utilisateur peut se trouver où que ce soit dans le monde et utiliser n'importe quel combiné téléphonique pour se relier à un serveur 5 du système. En utilisant une procédure de sécurité adaptée, telle qu'en envoyant automatiquement le numéro d'identification de son téléphone, l'utilisateur est reconnu par le serveur 5 comme étant le bon abonné et il peut extraire tout courrier électronique vidéo ou tout programme multimédia à partir de tout serveur multimédia 5 pour être téléchargé sur son module 8 (le module du lieu où il se trouve).

Le courrier électronique vidéo ou le programme multimédia est ensuite envoyé sur son module 8 et est automatiquement affiché sur son écran de télévision 1, si l'utilisateur fait face à son écran de télévision ou en est proche ; autrement, le programme multimédia est stocké sur le disque dur de son module 8.

Sur demande de l'utilisateur, le courrier électronique vidéo ou le programme multimédia peut être renvoyé vers tout autre écran ou appareil de télévision relié au module 8 si l'utilisateur a besoin que le programme multimédia soit retransmis vers un autre écran.

Une autre possibilité est que le serveur décide d'envoyer de l'information à l'utilisateur, par exemple des messages électroniques multimédias personnalisés ou un message audiovisuel multimédia destiné à un ensemble d'utilisateurs, dans ce cas le courrier électronique est transmis en direct sur le ou les module(s) 8 pour être immédiatement affiché, ou est téléchargé sur le ou les module(s) 8 de l'endroit où se trouve(ent) le ou les utilisateurs pour être visualisé en différé.

Une autre possibilité est que le serveur décide d'envoyer de l'information à l'utilisateur, par exemple des messages électroniques multimédias, dans ce cas, chaque courrier électronique est téléchargé sur le module 8 de l'endroit où se trouve l'utilisateur puis le module 8 décide de prévenir l'utilisateur.

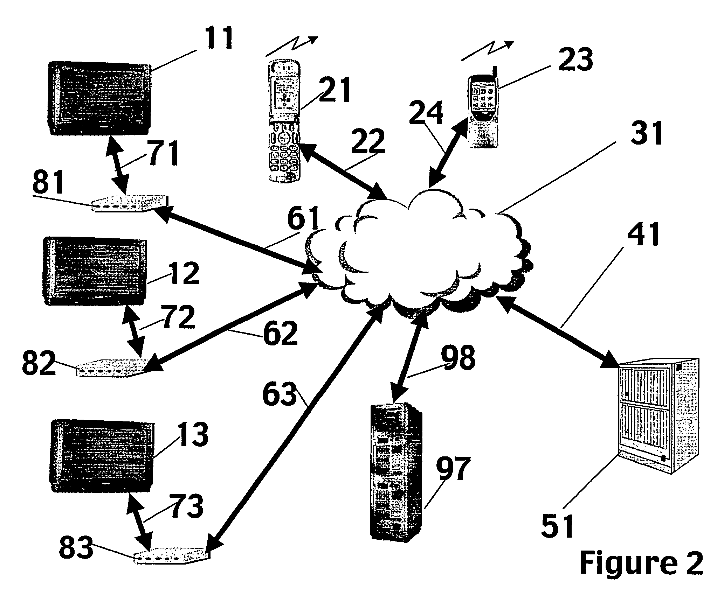

Un exemple de réalisation préféré du système de la présente invention est présenté sur la figure 2.

Le client 21 se connecte grâce à son téléphone portable par le lien réseau 22 au serveur de portail et multimédia 5 qui contient un tableau avec la liste des clients (21, 23, 97) et une identité pour chaque client. Le serveur de portail et multimédia 5 contient également un tableau avec la liste des dispositifs d'affichage pour chaque client (adresses physiques par exemple des dispositifs d'interface 81, 82, 83, reliés au réseau respectivement par les liaisons 61, 62, 63), avec un dispositif d'affichage prioritaire ou par défaut. A la demande du client 21, le serveur de portail 5 peut effacer ou rajouter une adresse de dispositif d'affichage ou un numéro de téléphone dans sa liste. En fonction du profil et des habitudes du client, le serveur peut classer l'identifiant du dispositif d'affichage 81, 82 ou 83 dans le tableau d'adresses à une place prioritaire, en fonction du débit de la ligne de transmission 61, 62 et 63 ou des paramètres de stockage du courrier multimédia de l'utilisateur. Pour se connecter au serveur de portail, l'utilisateur 21 compose l'adresse du serveur 5 à partir de son clavier téléphonique. Une autre variante est l'identification par reconnaissance vocale via le téléphone pour effectuer la connexion au serveur.

Le serveur 5 contient un annuaire composé de trois parties : un tableau contenant la liste des identifiants des utilisateurs, un tableau avec la liste des identifiants des terminaux de visualisation 81, 82 et 83, relatifs aux écrans 11, 12 et 13 (par exemple le numéro des dispositifs d'interface (Set Top Box ou STB)) et un tableau avec la liste des numéros de téléphone permanents ou temporaires correspondant à chaque client.

Les tables contenant la liste des terminaux d'affichage et des numéros de téléphone des utilisateurs sont partagées par plusieurs clients, assurant ainsi l'interopérabilité transparente entre les terminaux d'affichage et les utilisateurs. Le serveur de portail 5 peut répliquer le même dispositif d'affichage pour plusieurs clients, à la demande de ces derniers ou par décision du serveur en fonction de la disponibilité des terminaux, de la localisation géographique des clients, du débit demandé par chaque client ou de l'urgence de transfert de courrier multimédia demandé. Les informations contenues dans les tables sont paramétrables par le serveur 5 ou à la demande du client 21, 23 ou 97. Les téléphones appelant peuvent également être partagés par plusieurs clients. Dans ce cas, le serveur de portail identifie le numéro de téléphone ainsi que l'identifiant personnel de chaque client.

Quand un utilisateur 21 se connecte au serveur de portail et multimédia 5, et après identification du téléphone et de l'utilisateur, ce dernier fait parvenir au serveur son souhait de consulter son courrier multimédia, en désignant l'adresse du dispositif d'affichage 81, 82 ou 83 sur lequel il souhaite visualiser son courrier multimédia. Le serveur de portail identifie le dispositif d'affichage, se met en connexion avec lui et s'adresse à ses bases de données multimédias pour récupérer les informations, qui sont transférées temporairement sur le disque dur ou l'équipement d'enregistrement du dispositif d'interface (STB) 81 par exemple. Le client visualise les données et décide de les sauvegarder ou pas sur le disque dur ou le dispositif de sauvegarde du STB 81. Selon une autre variante, le serveur de portail ou le STB peuvent décider du stockage temporaire ou permanent sur le dispositif de sauvegarde du STB des données multimédias en fonction de l'analyse de leur contenu, en fonction de la date, ou en fonction de la place disponible. Selon une autre variante, le serveur 5 peut décider en fonction des droits, du profil et des habitudes du client, d'envoyer au préalable les données sur le disque dur du STB ayant une adresse prioritaire du client, et par la suite, envoyer un message sur le téléphone prioritaire du client pour lui indiquer le transfert de données. Le client peut être également contacté par le STB lui signalant la réception de données multimédias provenant du serveur ou d'un expéditeur quelconque.

Lorsque l'utilisateur 21 souhaite envoyer du contenu multimédia et après connexion au serveur, identification et chargement du protocole adapté pour le transfert de données, le STB envoie vers le serveur deux flux séparés : l'un contenant l'identification du destinataire, son numéro de téléphone prioritaire et le numéro de son dispositif d'affichage par défaut par exemple. Le deuxième flux contient les données multimédias de type vidéo, audio ou texte. Le serveur récupère les deux flux et fait parvenir le contenu vers le destinataire 23 par exemple via la liaison 24. Le serveur peut aussi décider d'envoyer le contenu vers un autre terminal que celui demandé par l'expéditeur ou contacter le destinataire sur un autre numéro de téléphone en fonction du profil et des caractéristiques temporaires du destinataire stockées dans la table de données du serveur relative à chaque client. Le serveur décide également de stocker temporairement le contenu envoyé ou de l'envoyer sur le disque dur du STB du destinataire ou de construire un message pour le destinataire en fonction du contenu de l'information multimédia. Le serveur décide également du moment du transfert des contenus sans la demande de l'utilisateur en fonction des capacités du réseau de télécommunication, de la quantité des informations, de leur contenu et/ou du profil du client destinataire.

Le serveur de portail et multimédia 5 et le STB 8 contiennent également des outils d'analyse et de transformation du contenu multimédia. Par exemple, ils peuvent modifier le format du contenu en fonction du débit disponible sur le réseau de télécommunication et du prix que l'utilisateur est prêt à payer pour la récupération ou l'envoi des données. Le serveur et le STB peuvent aussi modifier le format des données multimédias en fonction de la taille, du type et du standard de l'écran d'affichage 11, 12 ou 13 et les envoyer vers ces écrans via les liens 71, 72 ou 73, par exemple réduire la taille de l'image provenant d'un format DVD pour l'affichage sur un écran de voiture ou un téléviseur portable. Le serveur et le STB transforment également les messages en fonction du type de téléphone à partir duquel les utilisateurs sont connectés, assurant ainsi la cohabitation de plusieurs standards téléphoniques.

Le serveur et le STB adaptent ainsi les contenus multimédias aux formats compatibles et assurent l'interopérabilité et la cohabitation de différents standards multimédias et téléphoniques. Le dispositif de la présente invention est évolutif en fonction des différents moyens de télécommunication, auto décisionnel et auto adaptatif en fonction du contenu des informations multimédias, des capacités du réseau, des dispositifs d'affichage, des téléphones et du profil du client (habitudes, paiements, localisation temporaire). L'architecture du système permet la personnalisation des services, l'interopérabilité de différentes technologies et l'interactivité directe ou indirecte entre plusieurs utilisateurs.

Le serveur 5 et le STB 8 peuvent décider du transfert automatique de messages multimédias vers un ensemble d'utilisateurs en fonction de leurs caractéristiques.

Le dispositif est évolutif de par ses capacités décisionnelles de contacter les clients, de transférer, d'analyser et de modifier les contenus pour les adapter aux conditions de transfert, à la localisation et/ou au profil des clients.

Un exemple d'application est le transfert de données multimédias à travers un réseaux de télécommunication 3. L'utilisateur 21 appelle le serveur de portail 5 avec son téléphone de type UMTS (Universal Mobile Telecommunication System) avec capacité d'affichage vidéo, pour envoyer une information audiovisuelle à l'utilisateur 23 qui lui est équipé d'un simple téléphone GSM (Global System for Mobile) et relié au réseau via le lien radio 24. Le serveur de portail et multimédia 5 possède une interface d'identification des différents types d'appareils téléphoniques, d'analyse et de transformation de contenu et d'adaptation du format des contenus. Il peut donc assurer la compatibilité et la cohabitation des standards téléphoniques tels que l'UMTS, le GSM, le GPRS (General Packet Radio Service), les téléphones portables équipés de l'I-mode, et le téléphone classique filaire ou sans fil. Le serveur identifie que le destinataire 23 du message vidéo possède un téléphone de type GSM sans capacité d'affichage multimédia. Le serveur envoie alors un message compatible avec le GSM, par exemple un SMS (Short Message Service) pour prévenir le destinataire qu'il a reçu un message multimédia. Le serveur peut également envoyer un message vocal indiquant la présence de courrier audiovisuel multimédia ou bien faire parvenir à l'utilisateur la partie vocale du message multimédia. Le destinataire 23 se connecte au serveur de portail et après identification, le serveur lui demande sur lequel des terminaux (11, 12 ou 13) il souhaite afficher son contenu audiovisuel. Le client désigne par exemple le numéro du STB 83 avec son écran d'affichage 13 sur lequel il souhaite recevoir le contenu vidéo. Le serveur vérifie si le dispositif d'affichage est disponible et non occupé par un autre utilisateur et en fonction des capacités du réseau et du type d'écran d'affichage décide de transformer, d'adapter et de transférer le contenu à travers le lien 63 au STB 83. Le serveur peut également envoyer le contenu vidéo non modifié dans le STB, à ce moment-là, le STB 83 grâce à ses outils d'analyse et de modifications, peut décider de transformer les données reçues en fonction du type d'écran ou de leur contenu.

Un autre exemple d'application est le cas où l'utilisateur 97 est équipé d'un ordinateur et décide d'envoyer à travers le lien 98 le même message audiovisuel à l'utilisateur 21 équipé d'un téléphone UMTS et à l'utilisateur 23 équipé d'un téléphone GSM.

Le serveur constate alors que le destinataire du message vidéo a un téléphone de type GSM sans capacité d'affichage multimédia. Le serveur envoie donc un message compatible avec le GSM, par exemple un SMS (Short Message Service) pour prévenir le destinataire qu'il a reçu un message multimédia. Le serveur peut également envoyer un message vocal indiquant la présence de courrier audiovisuel ou bien faire parvenir à l'utilisateur la partie vocale du message audiovisuel. Le destinataire 23 se connecte au serveur de portail et après identification, désigne le numéro du STB auquel il souhaite recevoir le contenu vidéo, par exemple le dispositif 82 avec son écran de télévision 72. Le serveur vérifie si le dispositif d'affichage est disponible et en fonction des capacités du réseau et du type d'écran d'affichage décide de transformer, d'adapter le contenu et de le transférer. Le serveur peut également envoyer le contenu vidéo non modifié dans le STB, à ce moment-là, le STB grâce à ses outils d'analyse et de modifications, peut décider de transformer les données reçues en fonction du type d'écran ou de leur contenu.

De son côté, l'utilisateur possédant un téléphone portable UMTS 21 reçoit, via le serveur de portail, une information lui indiquant qu'il a reçu du contenu multimédia dans sa messagerie, et que ce contenu multimédia audiovisuel a été envoyé par l'utilisateur 97. L'information peut être sous forme texte, vocale et/ou contenir tout ou partie des données vidéos ou audio parvenues dans la messagerie. En fonction du contenu du message, l'utilisateur décide s'il veut afficher le message sur un écran de télévision ou sur l'écran de son téléphone portable, ce dernier possédant les capacités d'affichage multimédia. L'utilisateur se connecte au serveur et après son identification et celui de son téléphone, une cession UMTS est établie avec les protocoles de communications correspondants entre le réseau du serveur et le téléphone UMTS.

Les protocoles de communications établissent les règles à respecter afin d'effectuer le transport de données. Les protocoles de communication utilisés sont présents dans la partie radio de l'UMTS appelée UMTS Radio Access Network (UTRAN) et sont basés sur les couches basses du modèle OSI/ISO. Leurs fonctionnalités sont réparties entre l'équipement utilisateur 21 et le Réseau Radio Fixe lié 3 au serveur de portail et multimédia. Le processus complexe de communications est organisé par couches. Le serveur fait la demande au récepteur et l'on dit que le service est confirmé lorsque le lien entre les deux est établi grâce à l'échange protocolaire de messages entre les deux parties qui contient plusieurs étapes. Le serveur demande la connexion et lorsque l'indication de demande parvient au téléphone, ce dernier répond et la confirmation est envoyée au serveur. Après identification du numéro du téléphone et du dispositif d'affichage, le serveur prépare les données en les encapsulant avec plusieurs entêtes successives jusqu'à former le block encapsulé IDU (Interface Data Unit) qui est transporté jusqu'au terminal et désencapsulé par ce dernier. Au niveau de la couche physique, les services de transport sont de deux types : en mode connecté (mode circuit) et en mode non-connecté (en mode paquets). Le choix du mode de transport est décidé par le serveur et le terminal. Par exemple, le terminal décide d'établir un service de transport en mode connecté, car ce mode permet au terminal UMTS (donc à l'utilisateur) de négocier les conditions de transfert des données multimédias en termes de débit, taux d'erreur maximale autorisée et délai maximum de transfert. Si la négociation aboutit, la connexion est établie et reste valable jusqu'à ce qu'une demande de libération vienne de la part du serveur ou du terminal. Pendant cette étape, les données sont transférées vers le terminal. Les protocoles de transport de l'UMTS permettent de changer les conditions dans lesquelles les données sont transférées en cours de route et notamment cela est particulièrement adapté au transport d'information multimédia, où les exigences en termes de type de données et vitesse de transfert peuvent varier dans de larges proportions. Le transfert terminé, la cession est fermée par le service UMTS appelé «RELEASE». Si, au court du transfert, le dispositif d'analyse du téléphone détecte trop d'erreur, par exemple plus que le taux maximal autorisé, il peut interrompre immédiatement la cession à l'aide du service UMTS appelé «ABORT». De son côte, le réseau aussi peut interrompre la cession à n'importe quel moment avec la fonctionnalité UMTS appelé «P-ABORT», si par exemple il juge que la qualité du canal estimée n'est pas suffisante pour le transfert des données multimédias.

Si le serveur décide de transférer les données en mode paquets, les ressources canal radio sont allouées en fonction de la quantité des données, des ressources radio disponibles et du prix que l'utilisateur est prêt à payer, ce mode étant bien adapté pour le transport de grandes quantités d'information.

Les données sont transférées par la couche physique divisée en canaux de transport et contrôlées par les protocoles des couches supérieures de l'architecture UTRAN. Les canaux de transport peuvent être de deux types : dédiés (pour le mode circuit ou paquets) et communs (pour l'échange d'information entre le réseau et les terminaux). Chaque canal est adapté pour l'envoi de données spécifiques. Par exemple, pour envoyer des données vidéo vers le terminal UMTS, le canal DCH (Dedicated Channel) est utilisé en mode dédié uniquement par un utilisateur pour transférer l'information en mode connecté ou bien peut aussi être utilisé en mode dédié partagé pour un transfert en mode paquets par plusieurs utilisateurs équipés de terminaux UMTS.

## Revendications

1. Procédé pour l'accès au courrier électronique vidéo et/ou aux programmes et/ou aux séquences vidéo reçus par et/ou stockés dans des serveurs multimédia adaptés (5) grâce à un réseau de télécommunication étendu (3) par des utilisateurs autorisés pourvus d'agencements, dans un système de distribution pour accéder au courrier électronique vidéo et multimédia à partir d'un simple téléphone à ligne unique ou un téléphone mobile ou cellulaire vocal pour affichage dans des conditions données sur des écrans de télévision, comprenant les étapes consistant à :
- utiliser un téléphone (2, 10), pour accéder au serveur multimédia concerné (5) par le réseau étendu de télécommunication (3) ;
- vérifier l'identité et l'autorisation de l'utilisateur au serveur concerné (5) ;
- commander le transfert d'un ou de plusieurs courrier(s) électronique(s) vidéo ou multimédia(s) donné(s) ou programme(s) ou séquence(s) vidéo ou multimédia(s) à un agencement d'interfaçage vidéo identifié (8) également relié audit réseau de télécommunication étendu (3) pour un affichage immédiat ou pour au moins un stockage partiel et/ou un affichage différé ;
- afficher, transférer, enregistrer ou traiter d'une autre manière le/les courrier(s) électronique(s) vidéo ou le/les programme(s) et/ou la/les séquence(s) transféré(s) sur instructions de l'utilisateur,
**caractérisé en ce qu'**il comprend
- une étape de préchargement d'un protocole de transfert adapté et/ou un logiciel de décodage ou de désembrouillage à partir dudit serveur (5) vers ledit agencement d'interfaçage vidéo (8)
et une étape de vérification de l'identité de l'utilisateur et de ses droits en fonction de possibles restrictions d'utilisation avant l'exécution de ladite étape d'affichage, de transfert ou de traitement des courriers électroniques.

2. Procédé selon la revendication 1, **caractérisé en ce qu'**il comporte en outre une étape consistant à :
- afficher, transférer, enregistrer ou traiter d'une autre manière le(s)courrier(s) électronique(s) vidéo ou le(s) programme(s) ou la(les) séquence(s) transféré(s) sur décision du serveur et après que ledit serveur ait vérifié l'identité et les droits de l'utilisateur en fonction de possibles restrictions d'utilisation ;

3. Procédé selon la revendication 1 ou 2, **caractérisé en ce qu'**il comporte en outre une étape consistant à :
- afficher, transférer, enregistrer ou traiter d'une autre manière le(s) courrier(s) électronique(s) vidéo ou le(s) programme(s) ou la(les) séquence(s) transféré(s) sur appel après décision dudit agencement d'interfaçage vidéo (8) vers l'utilisateur et/ou le serveur, et en fonction des instructions de l'utilisateur et autorisation du serveur, après vérification de l'identité de l'utilisateur et de ses droits en fonction de possibles restrictions d'utilisation.

4. Procédé selon la revendication 1, 2 ou 3, **caractérisé en ce qu'**il comprend l'utilisation d'un téléphone fixe ou d'un téléphone cellulaire logiquement lié au domicile de l'utilisateur pour afficher le contenu multimédia à un dispositif d'affichage au domicile de l'utilisateur.

5. Procédé selon la revendication 1, 2 ou 3, **caractérisé en ce qu'**il comprend l'utilisation d'un téléphone fixe ou d'un téléphone cellulaire logiquement lié au domicile de l'utilisateur pour afficher le contenu multimédia à un dispositif d'affichage à un endroit prédéterminé différent du domicile de l'utilisateur.

6. Procédé selon la revendication 1, 2 ou 3, **caractérisé en ce qu'**il comprend l'utilisation d'un téléphone fixe non lié logiquement au domicile de l'utilisateur ou d'un téléphone cellulaire n'appartenant pas à l'utilisateur pour afficher le contenu multimédia à un dispositif d'affichage au domicile de l'utilisateur.

7. Procédé selon la revendication 1, 2 ou 3, **caractérisé en ce qu'**il comprend l'utilisation d'un téléphone fixe n'appartenant pas au domicile de l'utilisateur ou d'un téléphone cellulaire n'appartenant pas à l'utilisateur pour afficher le contenu multimédia à un dispositif d'affichage à un endroit prédéterminé différent du domicile de l'utilisateur.

8. Procédé selon la revendication 1, 2 ou 3, **caractérisé en ce que** les serveurs peuvent décider l'envoi, le transfert, la diffusion ou la distribution d'un contenu multimédia vers un ensemble d'utilisateurs.

9. Procédé selon la revendication 1, 2 ou 3, **caractérisé en ce que** les dispositifs d'interfaçage (8) peuvent décider l'envoi, le transfert, la diffusion ou la distribution d'un contenu multimédia vers un ensemble d'utilisateurs.

10. Procédé selon l'une au moins des revendications précédentes, **caractérisé en ce que** les liaisons entre les serveurs (5), les dispositifs d'interfaçage (8) et les utilisateurs sont bilatérales et l'échange de données multimédias se fait dans les deux sens.

11. Procédé selon l'une au moins des revendications précédentes, **caractérisé en ce qu'**il assure une interactivité multimédia entre les utilisateurs sans que lesdits utilisateurs aient une connexion directe entre eux.

12. Procédé selon l'une au moins des revendications précédentes, **caractérisé en ce qu'**un ensemble d'utilisateurs peut décider l'envoi, le transfert, la diffusion ou la distribution d'un contenu média à partir d'un serveur après que ledit serveur a vérifié l'identité et les droits des utilisateurs en fonction de possibles restrictions d'utilisation.

13. Procédé selon la revendication 1, 2 ou 3, **caractérisé en ce que** le serveur multimédia (5) décide que le module (8) stocke le courrier électronique vidéo ou le contenu multimédia sur le disque dur ou tout dispositif de stockage du module (8).

14. Procédé selon la revendication 1, 2 ou 3, **caractérisé en ce que** le module (8) lui-même décide de stocker le courrier électronique vidéo ou le contenu multimédia sur son disque dur ou son dispositif de stockage.

15. Système de distribution pour accéder au courrier électronique vidéo et multimédia à partir d'un simple téléphone à ligne unique ou un téléphone mobile ou cellulaire vocal pour affichage dans des conditions données sur des écrans de télévision pour la mise en oeuvre du procédé selon la revendication 1, **caractérisé en ce qu'**il comprend essentiellement, d'une part, un ou plusieurs serveurs multimédia (5), recevant et stockant au moins le courrier électronique vidéo, des programmes et des séquences vidéo et reliés chacun au réseau de télécommunication étendu (3) et d'autre part, une pluralité d'agencements d'interfaçage vidéo (8), reliés également au réseau de télécommunication étendu (3) et installés aux domiciles des utilisateurs ou dans des lieux prédéterminés différents des domiciles des utilisateurs, chaque agencement d'interfaçage vidéo (8) étant associé à au moins un dispositif d'affichage de type écran de télévision (7) et un téléphone cellulaire (2) ou un simple téléphone à ligne unique (10), ledit téléphone et ledit dispositif d'affichage étant indépendants du domicile de l'utilisateur et de l'utilisateur lui-même, et ledit téléphone comportant des moyens pour se connecter au serveur, des moyens pour être connecté par le serveur ou par l'agencement d'interfaçage vidéo au dispositif d'affichage pour recevoir, échanger et transférer des informations avec le serveur et des moyens pour participer au transfert et à l'échange de données multimédias, le serveur comportant des moyens pour le préchargement d'un protocole de transfert adapté et/ou un logiciel de décodage ou de désembrouillage à partir dudit serveur (5) vers ledit agencement d'interfaçage vidéo (8) et des moyens de vérification de l'identité de l'utilisateur et de ses droits en fonction de possibles restrictions d'utilisation avant l'exécution de ladite étape d'affichage, de transfert ou de traitement des courriers électroniques.

16. Système de distribution selon la revendication 15, **caractérisé en ce qu'**il analyse et transforme le contenu des données multimédias en fonction des caractéristiques du dispositif d'affichage.

17. Système de distribution selon la revendication 15, **caractérisé en ce qu'**il analyse et transforme le contenu des données multimédia en fonction du débit du réseau de télécommunication.

18. Système de distribution selon la revendication 15, **caractérisé en ce qu'**il analyse et transforme le contenu et le débit des données multimédias en fonction du prix que l'utilisateur est prêt à payer, l'utilisateur ayant la possibilité de négocier différents paramètres du transfert comme le débit, le taux d'erreur et la vitesse de transfert.

19. Système de distribution selon la revendication 15, **caractérisé en ce qu'**il permet de relier et de faire cohabiter différentes technologies dotées ou non de capacités multimédias.

## Claims

1. Method for access to video mail and / or programs and / or video sequences received by and / or stored in adapted multimedia servers (5) through a wide area telecommunication network (3) by authorised users provided with arrangements, in a distribution system to access video mail and multimedia mail from a simple single-line phone or a voice mobile (or cell) phone for display on television screens under given conditions, including the following steps:
- use a phone (2, 10) to access the multimedia server concerned (5) by the wide area telecommunication network (3) ;
- verify the identity and authorisation of the user to the server concerned (5);
- order the transfer or one or several given video mail or multimedia mail or video or multimedia program(s) or sequence(s) to an identified video interfacing arrangement (8) also connected to the said wide area telecommunication network (3) for immediate display or for at least partial storage and / or delayed display;
- display, transfer, save or process the video mail and /or program(s) and / or sequence(s) transferred following the user's instructions,
**characterised in that** it comprises
- a step to preload an adapted transfer protocol and / or a decoding or descrambling software starting from the said server (5) to the said video interfacing arrangement (8)
and a step to verify the user's identity and his rights as a function of possible usage restrictions before execution of the said mail display, transfer or processing step.

2. Method set forth in claim 1, **characterised in that** it also comprises a step consisting of:
- displaying, transferring, recording or any other type of processing of video mail or program(s) or sequence(s) transferred following the server's decision and after the said server has verified the user's identity and rights as a function of possible usage restrictions.

3. Method set forth in either claim 1 or 2, **characterised in that** it also comprises a step consisting of:
- displaying, transferring, recording or any other type of processing the video mail or program(s) or sequence(s) transferred to the user and / or the server on call after a decision of the said video interfacing arrangement (8), following the user's instructions and authorisation by the server after verifying the user's identity and rights as a function of possible usage restrictions.

4. Method set forth in either claim 1, 2 or 3, **characterised in that** it comprises the use of a fixed phone or a cell phone logically connected to the user's home to display the multimedia contents to a display device at the user's home.

5. Method set forth in either claim 1, 2 or 3, **characterised in that** it comprises the use of a fixed phone or a cell phone logically connected to the user's home to display the multimedia contents on a display device located at a predetermined location different from the user's home.

6. Method set forth in either claim 1, 2 or 3, **characterised in that** it comprises the use of a fixed phone not logically connected to the user's home or a cell phone not belonging to the user to display the multimedia contents to a display device at the user's home.

7. Method set forth in either claim 1, 2 or 3, **characterised in that** it comprises the use of a fixed phone not in the user's home or a cell phone not belonging to the user to display the multimedia contents to a display device at a predetermined location different from the user's home.

8. Method set forth in either claim 1, 2 or 3, **characterised in that** the servers can decide to send, transfer, broadcast or distribute a multimedia content to a set of users.

9. Method set forth in either claim 1, 2 or 3, **characterised in that** the interfacing devices (8) can decide to send, transfer, broadcast or distribute a multimedia content to a set of users.

10. Method set forth in at least one of the above claims, **characterised in that** the connections between the servers (5), interfacing devices (8) and users are bilateral and multimedia data are exchanged in both directions.

11. Method set forth in at least one of the above claims, **characterised in that** it assures multimedia interactivity between users without the said users have any direct connection with each other.

12. Method set forth in at least one of the above claims, **characterised in that** a set of users may decide to send, transfer, broadcast or distribute a multimedia content from a server after the said server has verified the user's identity and rights as a function of possible usage restrictions.

13. Method set forth in either claim 1, 2 or 3, **characterised in that** the multimedia server (5) decides that the module (8) stores video mail or the multimedia content on the hard disk or on any storage device in the module (8).

14. Method set forth in either claim 1, 2 or 3, **characterised in that** the module (8) itself decides to store the video mail or the multimedia content on its hard disk or on its storage device.

15. Distribution system for access to video mail and multimedia mail from a simple single-line phone or a voice mobile (or cell) phone for display on television screens under given conditions, to use the method set forth in claim 1, **characterised in that** it essentially comprises firstly one or several multimedia servers (5) receiving and storing at least video mail, video programs and sequences, and each connected to the wide area telecommunication network (3) and secondly a plurality of video interfacing arrangements (8), also connected to the wide area telecommunication network (3) and installed in users' homes or in predetermined locations different from users' homes, each video interfacing arrangement (8) being associated with at least one television screen type display device (7) and a cell phone (2) or a simple single-line phone (10), the said phone and the said display device being independent of the user's home and the user himself, and the said phone comprising means of connecting to the server, means of being connected by the server or by the video interfacing arrangement to the display device to receive, exchange and transfer information with the server, and means of participating in the transfer and exchange of multimedia data, the server comprising means of preloading an adapted transfer protocol and / or a decoding or descrambling software starting from the said server (5) to the said video interfacing arrangement (8) and means of verifying the user's identity and rights as a function of possible usage restrictions before execution of the said step to display, transfer or process emails.

16. Distribution system set forth in claim 15, **characterised in that** it analyses and transforms the content of multimedia data as a function of the characteristics of the display device.

17. Distribution system set forth in claim 15, **characterised in that** it analyses and transforms the content of multimedia data as a function of the throughput of the telecommunication network.

18. Distribution system set forth in claim 15, **characterised in that** it analyses and transforms the content and throughput of multimedia data as a function of the price that the user is prepared to pay, the user being able to negotiate different transfer parameters such as the throughput, the error rate and the transfer rate.

19. Distribution system set forth in claim 15, **characterised in that** it can be used to connect and make different technologies with or without multimedia capacities cohabit.

## Patentansprüche

1. Verfahren für den Zugriff auf Video-E-Mails und/oder auf Programme und/oder auf Videosequenzen, die von geeigneten Multimedia-Servern (5) empfangen wurden und/oder in ihnen gespeichert wurden, dank eines weitläufigen Telekommunikationsnetzes (3) durch befugte Benutzer, die mit Einrichtungen ausgestattet sind, in einem Verteilersystem für den Zugriff auf Video- und Multimedia-E-Mails, durch ein einfaches Telefon mit Einzelanschluss oder ein Mobiltelefon oder ein zellulares Funktelefon zur Anzeige unter gegebenen Bedingungen auf Fernsehbildschirmen, wobei das Verfahren Phasen umfasst, die in Folgendem bestehen:
- Verwendung eines Telefons (2, 10) für den Zugriff auf den entsprechenden Multimedia-Server (5) über das weitläufige Telekommunikationsnetz (3);
- Überprüfung der Identität und der Befugnis des Benutzers auf dem entsprechenden Server (5);
- Steuerung der Übermittlung einer oder mehrerer gegebener Video- oder Multimedia-E-Mail (s) oder Programm (e) oder Video- oder Multimediasequenz (en) an eine gekennzeichnete Video-Interfaceanschluss-Einrichtung (8), die ebenfalls mit dem besagten weitläufigen Telekommunikationsnetz (3) verbunden ist, für eine sofortige Anzeige oder zumindest eine teilweise Speicherung und/oder eine indirekte Anzeige;
- Anzeige, Übermittlung, Speicherung oder Bearbeitung auf eine andere Art und Weise der Video-E-Mail (s) oder des Programms (der Programme) und/oder der Sequenz (en), die auf Anweisung des Benutzers übermittelt werden,
**dadurch gekennzeichnet, dass** es Folgendes umfasst:
- eine Stufe des vorherigen Ladens eines geeigneten Übermittlungsprotokolls und/oder eine Dekodierungs- oder Entzerrungssoftware über den besagten Server (5) zu der besagten Video-Interfaceanschluss-Einrichtung (8)
und eine Stufe zur Überprüfung der Identität des Benutzers und seiner Rechte entsprechend der möglichen Benutzungseinschränkungen vor der Durchführung der besagten Stufe der Anzeige, Übermittlung oder Bearbeitung der E-Mails.

2. Verfahren gemäß Anspruch 1, **dadurch gekennzeichnet, dass** es außerdem eine Stufe umfasst, die in Folgendem besteht:
- Anzeige, Übermittlung, Speicherung oder Bearbeitung auf eine andere Art und Weise der Video-E-Mail (s) oder des Programms (der Programme) oder der Sequenz (en), die auf Entscheidung des Servers übermittelt werden und nachdem der besagte Server die Identität und die Rechte des Benutzers entsprechend der möglichen Benutzungseinschränkungen überprüft hat;

3. Verfahren gemäß Anspruch 1 oder 2, **dadurch gekennzeichnet, dass** es außerdem eine Stufe umfasst, die in Folgendem besteht:
- Anzeige, Übermittlung, Speicherung oder Bearbeitung auf eine andere Art und Weise der Video-E-Mail (s) oder des Programms (der Programme) oder der Sequenz (en), die auf Aufruf, nach der Entscheidung der besagten Video-Interfaceanschluss-Einrichtung (8), an den Benutzer und/oder den Server übermittelt werden und entsprechend der Anweisungen des Benutzers und der Genehmigung des Servers, nach Überprüfung der Identität des Benutzers und seiner Rechte entsprechend der möglichen Benutzungseinschränkungen.

4. Verfahren gemäß Anspruch 1, 2 oder 3, **dadurch gekennzeichnet, dass** es die Benutzung eines fest installierten Telefons oder eines zellularen Funktelefons umfasst, das logisch mit dem Haus des Benutzers verbunden sind, um den Multimediainhalt auf einer Anzeigevorrichtung im Haus des Benutzers anzuzeigen.

5. Verfahren gemäß Anspruch 1, 2 oder 3, **dadurch gekennzeichnet, dass** es die Benutzung eines fest installierten Telefons oder eines zellularen Funktelefons umfasst, das logisch mit dem Haus des Benutzers verbunden sind, um den Multimediainhalt auf einer Anzeigevorrichtung an einem vorher festgelegten Ort, ausgenommen dem Haus des Benutzers, anzuzeigen.

6. Verfahren gemäß Anspruch 1, 2 oder 3, **dadurch gekennzeichnet, dass** es die Benutzung eines fest installierten Telefons umfasst, das nicht logisch mit dem Haus des Benutzers oder einem zellularen Funktelefon, das nicht dem Benutzer gehört, verbunden ist, um den Multimediainhalt auf einer Anzeigevorrichtung am Wohnsitz des Benutzers anzuzeigen.

7. Verfahren gemäß Anspruch 1, 2 oder 3, **dadurch gekennzeichnet, dass** es die Benutzung eines fest installierten Telefons umfasst, dass nicht zum Haus des Benutzers gehört oder eines zellularen Telefons, dass nicht dem Benutzer gehört, um den Multimediainhalt einer Anzeigevorrichtung an einem vorher festgelegten Ort, ausgenommen dem Haus des Benutzers, anzuzeigen.

8. Verfahren gemäß Anspruch 1, 2 oder 3, **dadurch gekennzeichnet, dass** die Server den Versand, die Übermittlung, die Verbreitung oder die Verteilung eines Multimediainhalts an eine Gruppe von Benutzern veranlassen können.

9. Verfahren gemäß Anspruch 1, 2 oder 3, **dadurch gekennzeichnet, dass** die Interfaceanschluss-Einrichtungen (8) den Versand, die Übermittlung, die Verbreitung oder die Verteilung eines Multimediainhalts an eine Gruppe von Benutzern veranlassen können.

10. Verfahren gemäß mindestens einer der vorherigen Ansprüche, **dadurch gekennzeichnet, dass** es sich bei den Verbindungen zwischen den Servern (5), den Interfaceanschluss-Einrichtungen (8) und den Benutzern um Duplex-Verbindungen handelt und der Austausch der Multimedia-Daten in beiden Richtungen erfolgt.

11. Verfahren gemäß mindestens einer der vorherigen Ansprüche, **dadurch gekennzeichnet, dass** es eine Multimedia-Interaktivität zwischen den Benutzern sichert, ohne dass die besagten Benutzer direkt untereinander verbunden sind.

12. Verfahren gemäß mindestens einer der vorherigen Ansprüche, **dadurch gekennzeichnet, dass** eine Gruppe von Benutzern den Versand, die Übermittlung, die Verbreitung oder die Verteilung eines Multimediainhalts über einen Server veranlassen kann, nachdem der besagte Server die Identität und die Rechte der Benutzer entsprechend der möglichen Benutzungseinschränkungen überprüft hat.

13. Verfahren gemäß Anspruch 1, 2 oder 3, **dadurch gekennzeichnet, dass** der Multimedia-Server (5) veranlasst, dass das Modul (8) die Video-E-Mail oder den MultimediaInhalt auf der Festplatte oder jeder beliebigen Speichervorrichtung des Moduls (8) speichert.

14. Verfahren gemäß Anspruch 1, 2 oder 3, **dadurch gekennzeichnet, dass** das Modul (8) selbst die Speicherung der Video-E-Mail oder des Multimediainhalts auf seiner Festplatte oder seiner Speichervorrichtung veranlasst.

15. Verteilersystem für den Zugriff auf die Video- und Multimedia-E-Mail über ein einfaches Telefon mit Einzelanschluss oder ein Mobiltelefon oder ein zellulares Funktelefon zur Anzeige, unter gegebenen Bedingungen, auf Fernsehbildschirmen für die Umsetzung des Verfahrens gemäß Anspruch 1, **dadurch gekennzeichnet, dass** es im wesentlichen einerseits ein oder mehrere Multimedia-Server (5) umfasst, der/die zumindest die Video-E-Mail, Programme und Video-Sequenzen empfängt und speichert und jeden mit dem weitläufigen Kommunikationsnetz (3) verbindet und andererseits eine Vielzahl von Video-Interfaceanschluss-Einrichtungen (8), die ebenfalls mit dem weitläufigen Kommunikationsnetz (3) verbunden sind und in den Häusern der Benutzer oder an vorher festgelegten Orten, ausgenommen den Häusern der Benutzer, installiert sind, wobei jede Video-Interfaceanschluss-Einrichtungen (8) mit mindestens einer Anzeigevorrichtung, Typ Fernsehbildschirm (7), verbunden ist und einem zellularen Funktelefon (2) oder einem einfachen Telefon mit Einzelanschluss (10), wobei das besagte Telefon und die besagte Anzeigevorrichtung unabhängig von dem Haus des Benutzers und dem Benutzer selbst sind und das besagte Telefon Mittel für seine Verbindung mit dem Server umfasst, Mittel für seine Verbindung durch den Server oder durch die Video-Interfaceanschluss-Einrichtung mit der Anzeigevorrichtung für den Empfang, den Austausch und die Übermittlung von Informationen mit dem Server und Mittel für die Teilnahme an der Übermittlung und dem Austausch von Multimedia-Daten, wobei der Server Mittel zum vorherigen Laden eines geeigneten Übermittlungsprotokolls umfasst und/oder eine Dekodierungs- oder Entzerrungssoftware über den besagten Server (5) zu der besagten Video-Interfaceanschluss-Einrichtung (8) und Mittel zur Überprüfung der Identität des Benutzers und seiner Rechte entsprechend der möglichen Benutzungseinschränkungen vor der Durchführung der besagten Stufe der Anzeige, Übermittlung oder Bearbeitung der E-Mails.

16. Verteilersystem gemäß Anspruch 15, **dadurch gekennzeichnet, dass** es den Inhalt der Multimedia-Daten entsprechend der Merkmale der Anzeigevorrichtung analysiert und umwandelt.

17. Verteilersystem gemäß Anspruch 15, **dadurch gekennzeichnet, dass** es den Inhalt der Multimedia-Daten entsprechend der Leistung des Telekommunikationsnetzes analysiert und umwandelt.

18. Verteilersystem gemäß Anspruch 15, **dadurch gekennzeichnet, dass** es den Inhalt und die Leistung der Multimedia-Daten entsprechend dem Preis, den der Benutzer bereit ist zu zahlen, analysiert und umwandelt, wobei der Benutzer die Möglichkeit hat, verschiedene Parameter der Übertragung, wie zum Beispiel die Leistung, die Fehlerquote und die Übertragungsgeschwindigkeit, auszuhandeln.

19. Verteilersystem gemäß Anspruch 15, **dadurch gekennzeichnet, dass** es ermöglicht, verschiedene dotierte oder nicht dotierte Technologien der Multimedia-Kapazitäten zu verbinden oder gemeinsam bestehen zu lassen.
